# EUROPÄISCHE PATENTSCHRIFT

(11) **EP 2 567 124 B1**
(45) Veröffentlichungstag und Bekanntmachung des Hinweises auf die Patenterteilung: **08.01.2014**
(21) Anmeldenummer: 11711891.9
(22) Anmeldetag: 04.04.2011
(51) Int. Cl.: F16H 7/12

(54) **SPANNVORRICHTUNG**
CLAMPING DEVICE
DISPOSITIF DE TENSIONNEMENT

(30) Priorität: 03.05.2010 DE 102010019054
(43) Veröffentlichungstag der Anmeldung: 13.03.2013
(73) Patentinhaber: Schaeffler Technologies AG & Co. KG, 91074 Herzogenaurach (DE)
(72) Erfinder: LIEBEL, Thorsten, 90766 Fürth (DE); HARTMANN, Bernd, 91085 Weisendorf (DE)
(86) Internationale Anmeldenummer: PCT/EP2011/055154
(87) Internationale Veröffentlichungsnummer: WO 2011/138101

(56) Entgegenhaltungen:
- WO-A1-02/38983
- WO-A1-2010/037232
- WO-A1-2010/041747
- DE-A1- 4 414 213
- DE-A1- 10 248 352
- DE-A1-102006 004 544
- DE-U1- 9 209 454
- GB-A- 2 377 981
- US-A- 4 557 707

## Beschreibung

Die Erfindung betrifft eine Spannvorrichtung, mit der ein Zugmittel eines Zugmitteltriebs der Brennkraftmaschine selbsttätig vorgespannt werden kann. Der Aufbau der Spannvorrichtung umfasst ein ortsfest positioniertes Basisteil, dem ein Schwenkarm zugeordnet ist, der über ein Drehlager auf einem Bolzen des Basisteils schwenkbar ist. Ein zwischen dem Basisteil und dem Schwenkarm eingesetztes Federmittel übt eine Spreizkraft aus und bewirkt im Betriebszustand der Spannvorrichtung weiterhin eine kraftschlüssige Abstützung einer mit dem Schwenkarm verbundenen Spannrolle an dem Zugmittel. Die Spannvorrichtung schließt weiterhin eine Dämpfungseinrichtung ein, die Stellbewegungen des Schwenkarms im Betriebszustand dämpft.

Spannvorrichtungen dieser Bauart finden vorzugsweise Anwendung in Riementrieben zum Antrieb verschiedener Aggregate einer Brennkraftmaschine. Das Zugmittel eines derartigen Zugmitteltriebs ist den Wechselbeanspruchungen der Brennkraftmaschine unterworfen aufgrund der Drehungleichförmigkeit, die sich durch den Verbrennungsprozess der Brennkraftmaschine einstellt. Für den Zugmitteltrieb können dabei Belastungszustände eintreten, die die zulässige Grenzspannung übersteigen. Die Wechselbeanspruchungen des Zugmittels führen zu Ausschlägen des Spannarms, die mittels einer Dämpfungseinrichtung minimiert werden.

Aus der gattungsgemäßen DE 102 48 352 A1 ist eine Spannvorrichtung bekannt, die ein Basisteil umfasst, das einstückig mit einem Bolzen verbunden ist, der gemeinsam mit einer Nabe des Schwenkarms sowie einer Gleitlagerung ein Drehlager bildet. An dem freien Ende ist dem Bolzen eine Stützscheibe zugeordnet, die einen Axialanschlag für den federbelasteten Schwenkarm bildet, wobei zwischen der Stützscheibe und dem Schwenkarm eine Reibscheibe eingesetzt ist, die eine Dämpfungseinrichtung für die Spannvorrichtung bildet.

Die US 45 57 707 zeigt eine weitere Spannvorrichtung, bei der zur Erzeugung einer Vorspannkraft des Zugmittels eine als Schraubenfeder ausgebildete Druckfeder in Umfangsrichtung eine Spannkraft bewirkt. Als Dämpfungseinrichtung der Spannvorrichtung wird die in axialer Richtung wirkende Druckkraft des Federmittels genutzt, die eine Reibscheibe beaufschlagt.

Die Aufgabe der vorliegenden Erfindung besteht darin, eine kompakte, kosten- und bauteiloptimierte Spannvorrichtung mit einer hohen Dämpfung zu realisieren.

Zur Lösung dieser Problemstellung umfasst die erfindungsgemäße Spannvorrichtung eine Dämpfungseinrichtung, die zwei getrennte, federkraftbeaufschlagte Reibelemente umfasst. An einer mit dem Bolzen des Basisteils verbundenen Stützscheibe ist eine Reibscheibe fixiert, an der der von einer Axialkraft des Federmittels beaufschlagte Schwenkarm abgestützt ist. Die Reibscheibe ist dazu reibschlüssig in einer axialen Aufnahme des Schwenkarms eingepasst. Als weiteres Reibelement ist ein Reibring vorgesehen, der ein Federende des Federmittels umschließt, an dem Schwenkarm drehfixiert und reibschlüssig an einer Innenwandung des topfartig gestalteten Basisteils abgestützt ist. Durch diese erfindungsgemäße Dämpfungseinrichtung kann vorteilhaft eine Dämpfung von ≥ 60 % relativ zur Mittelkraft erzielt werden. Die Coulombsche Reibung der Dämpfungseinrichtung wird durch die tangential wirkende Kraft des als Torsionsfeder ausgebildeten Federmittels auf den Reibring erzeugt und zusätzlich durch die Axialkraft des Federmittels an dem Schwenkhebel, der axial an der Reibscheibe abgestützt ist.

Die Anordnung der einzelnen Reibelemente erfolgt dabei so, dass diese innerhalb des vorhandenen Bauraums der einzelnen Bauteile der Spannvorrichtung integriert sind. Weiterhin erfordert weder die Herstellung noch die Integration bzw. Montage des Reibrings und der Reibscheibe in die Spannvorrichtung hohe Kosten, wodurch die funktionsoptimierte Spannvorrichtung gleichzeitig kostengünstig realisierbar ist. Einen weiteren Kostenvorteil der erfindungsgemäßen Spannvorrichtung bewirkt der Aufbau des Drehlagers, bestehend aus einem Bolzen, der als separates Bauteil mit einem Ende an dem Basisteil und mit dem weiteren Ende an der Stützscheibe fixiert ist. Durch den Entfall des einstückig mit dem Basisteil verbundenen Bolzens wird die Herstellung des üblicherweise als ein Gussteil gestalteten Basisteils vereinfacht. Weiterhin ermöglicht der erfindungsgemäße Aufbau die Verwendung einer kostenoptimierten Gleitlagerung, bestehend aus zwei axial getrennt eingesetzten Gleitlagerbuchsen.

Weitere vorteilhafte Ausgestaltungen der Erfindung sind Gegenstand der abhängigen Ansprüche 2 bis 14.

Gemäß einer vorteilhaften Ausgestaltung der Erfindung ist vorgesehen, dass die Reibscheibe der Dämpfungseinrichtung verdrehgesichert über eine Verzahnung formschlüssig mit der Stützscheibe in Eingriff steht. Vorzugsweise bietet sich dazu eine Vielzahn- bzw. eine Hirth-Verzahnung als Stirnverzahnung an. Mit dieser Verzahnung kann ein gewisser radialer Ausgleich von Koaxialfehlern erreicht werden, die sich bspw. durch die Gleitlagerung der Spannvorrichtung einstellen.

Auf der zum Schwenkarm gerichteten Seite greift die Reibscheibe mit zumindest einer radial ausgerichteten bzw. konisch verlaufenden und / oder einer axial ausgerichteten Reibfläche in eine korrespondierend ausgebildete axiale Aufnahme des Schwenkarms. Zwecks Einstellung bzw. Einflussnahme der Reibung bietet es sich an, für eine Reibscheibe, die einen Innen- und einen Außenkonus bildet, die Flankenwinkel übereinstimmend oder voneinander abweichend auszulegen.

Der weitere, der Dämpfungseinrichtung zugehörige, eine Trennfuge aufweisende Reibring ist im Einbauzustand bedingt durch die Spreizkraft des Federmittels über eine weitestgehend zylindrische Mantelfläche reibschlüssig tels über eine weitestgehend zylindrische Mantelfläche reibschlüssig an der Innenwandung des Gehäuses abgestützt. Alternativ dazu bietet es sich an, ein Reibelement oder eine Trennfuge aufweisenden Reibring einzusetzen, der mit zumindest einem Reibschuh unterstützt durch die Spreizkraft des Federmittels reibschlüssig an der Innenwandung des Gehäuses abgestützt ist.

Der eine Trennfuge aufweisende Reibring umfasst einen radial nach innen gerichteten Keil, der im Betriebszustand mit einer Keilfläche eines axial vorspringenden Ansatzes des Schwenkarms und einem Federende des Federmittels zusammenwirkt. Dieses Konstruktionsprinzip hat zur Folge, dass mit zunehmendem Verdrehwinkel des Schwenkarms gegenüber dem Basisteil und der damit verbundenen erhöhten Torsionskraft des Federmittels sich der Keil des Reibrings radial nach außen verschiebt. Damit verbunden stützt sich der Reibring mit einer erhöhten Kraft an der Innenwandung des Basisteils ab, wodurch sich vorteilhaft eine erhöhte Dämpfung einstellt.

Als Werkstoff für die Reibscheibe und / oder den Reibring eignet sich bevorzugt PA 46 mit einem chemisch gekoppelten PTFE Zusatz. Der PTFE Zusatz kann dabei an die jeweilige Anwendung angepasst werden. Weiterhin bietet es sich an, als Werkstoff für die Reibscheibe und / oder den Reibring alternative Kunststoffe einzusetzen, die die Anforderungen hinsichtlich des Verschleißverhaltens und der Reibung erfüllen.

Der Schwenkarm ist über eine Nabe in Verbindung mit einer Gleitlagerung auf dem Bolzen schwenkbar zur Bildung eines Drehlagers. Der als ein separates Bauteil ausgelegte, in dem Basisteil lagefixierte Bolzen ist vorteilhaft als ein Stahlbolzen ausgeführt, an dessen freien Ende die Stützscheibe verdrehgesichert ist. Vorzugsweise ist der Bolzen des Drehlagers zur Schaffung eines Fügeverbandes mit einem Zentrierbolzen in eine korrespondierende Passbohrung des Basisteils und der Stützscheibe eingepasst und form- und / oder stoffschlüssig befestigt ist.

Die einzelnen Bauteile des Drehlagers, das Basisteil, der Bolzen, der Schwenkarm sowie die Stützscheibe sind erfindungsgemäß aus gleichen oder unterschiedlichen Werkstoffen hergestellt. Ein aus Stahl hergestellter Bolzen kann folglich bspw. mit einem Basisteil und einem Schwenkarm aus Aluminium kombiniert werden. Zur Gewichtsoptimierung bietet es sich an, den Bolzen als Hohlkörper mit einer Bohrung auszubilden.

Eine weitere erfindungsgemäße Ausgestaltung sieht vor, den Schwenkarm auf der vom Basisteil abgewandten Seite mit einem axial vorstehenden Bord zu versehen, der unter Einhaltung eines Ringspaltes die Stützscheibe außenseitig umschließt. Der axiale vorstehende Bord eignet sich zur Aufnahme eines Dichtelementes, zum Beispiel einer Lippendichtung, die sich am Außenumfang der Stützscheibe abstützt, wodurch sich eine wirksame Abdichtung der Dämpfungseinrichtung einstellt.

Die bauraumoptimierte Konzeption der erfindungsgemäßen Spannvorrichtung unterstreichend, ist die endseitig des Schwenkarms positionierte Spannrolle auf der zum Basisteil gerichteten Seite positioniert. Diese Anordnung begrenzt den axialen Bauraum der Spannvorrichtung im wesentlichen auf die Breite des Basisteils sowie des Schwenkarms.

### Kurze Beschreibung der Zeichnungen

Die Erfindung wird anhand der in den Figuren 1 bis 4 dargestellten Ausführungsbeispiele näher erläutert. Dabei zeigen:
- Fig. 1: in einer Schnittdarstellung eine erfindungsgemäße Spannvorrichtung;
- Fig. 2: die Spannvorrichtung gemäß Fig. 1 in einer Perspektive, in der die Reib-scheibe der Dämpfungseinrichtung sichtbar ist;
- Fig. 3: den Reibring der Dämpfungseinrichtung im eingebauten Zustand;
- Fig. 4: zur Verdeutlichung der Dämpfungseinrichtung einen Teilschnitt der Spannvorrichtung.

### Ausführliche Beschreibung der Zeichnungen

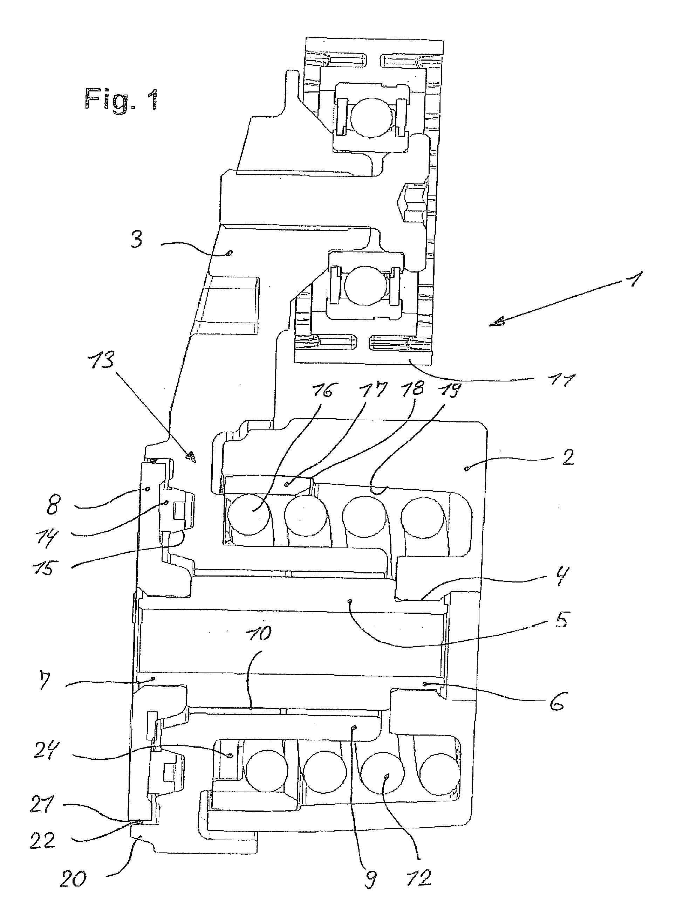

Die Figur 1 zeigt eine Spannvorrichtung 1 für einen Zugmitteltrieb in einem Längsschnitt. Der Aufbau umfasst ein ortsfest, zum Beispiel an dem Gehäuse einer Brennkraftmaschine, befestigtes Basisteil 2, dem ein Schwenkarm 3 zugeordnet ist. Zentrisch in dem topfartig gestalteten Basisteil 2 ist eine Aufnahme 4 eingebracht, die für einen zylindrischen Bolzen 5 bestimmt ist. Der Bolzen 5 bildet endseitig jeweils gestufte Endabschnitte 6,7, die jeweils in eine Passbohrung der Aufnahme 4 des Basisteils 2 bzw. einer Stützscheibe 8 eingesetzt sind. Mittels einer Verstemmung oder einer stoffschlüssigen Verbindung, insbesondere Schweißung, wird eine dauerfeste Fixierung des Bolzens 5 an dem Basisteil 2 bzw. der Stützscheibe 8 erzielt. Eine sich einstellende Mantelfläche des Bolzens 5 zwischen der Aufnahme 4 des Basisteils 2 und der Stützscheibe 8 wird von einer Nabe 9 des Schwenkarms 3 umschlossen, der über eine Gleitlagerung 10, bestehend aus zwei axial versetzten Gleitlagerbuchsen, drehbar angeordnet ist. Der Schwenkarm 3 dient zur Aufnahme einer endseitig auf der zum Basisteil 2 gerichteten Seite positionierten Spannrolle 11, die im Einbauzustand federkraftbeaufschlagt an einem in Figur 1 nicht abgebildeten Zugmittel anliegt. Zur kraftschlüssigen Abstützung der Spannrolle 11 ist zwischen dem Basisteil 2 und dem Schwenkarm 3 eine Schraubenfeder als Federmittel 12 vorgespannt eingesetzt. Eine Torsionskraft des Federmittels 12 bewirkt die kraftschlüssige Abstützung der Spannrolle 11 an dem Zugmittel. Durch die axiale Spreizkraft des Federmittels 12 wird der Schwenkarm 3 in Richtung der Stützscheibe 8 beaufschlagt. Zur Dämpfung von Stellbewegungen des Schwenkarms 3 im Betriebszustand umfasst die Spannvorrichtung 1 eine zwei Reibelemente einschließende Dämpfungseinrichtung 13. Ein erstes Reibelement bildet die Reibscheibe 14, die an der Stützscheibe 8 drehfixiert ist und gegenseitig formschlüssig in eine ringförmige Aufnahme 15 des Schwenkarms 3 eingreift. Als zweites Reibelement ist ein unmittelbar mit einem Federende 16 des Federmittels 12 zusammenwirkender Reibring 17 vorgesehen, der an dem Schwenkarm 3 drehfixiert ist und außenseitig über eine Mantelfläche 18 an einer Innenwandung 19 des Basisteils 2 abgestützt ist. Aufgrund dieser Anordnung bewirkt eine Stellbewegung des Schwenkarms eine synchrone Relativbewegung des Reibrings 17 gegenüber dem Basisteil 2. Der Schwenkarm 3 bildet einen axial vorstehenden Bord 20, der die Stützscheibe 8 unter Einhaltung eines Ringspaltes 21 radial beabstandet umschließt. Ein in dem Bord 20 eingesetztes Dichtelement 22 bewirkt eine wirksame Abdichtung des Ringspaltes 21 und damit der Dämpfungseinrichtung 13.

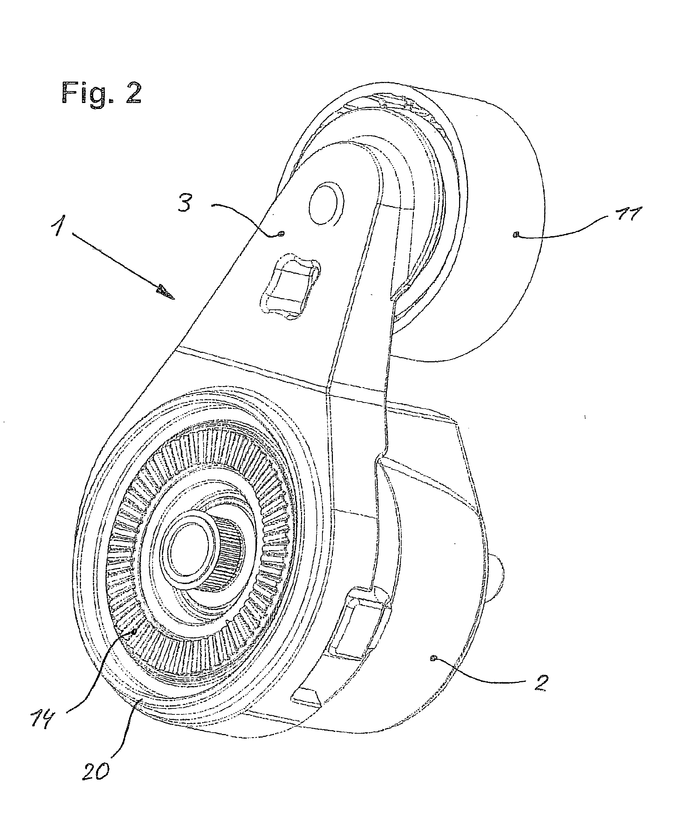

Die Figur 2 zeigt die Spannvorrichtung 1 in einer Perspektive mit einer Sicht auf den Schwenkarm 3. Das Fehlen der Stützscheibe 8 verdeutlicht die Einbaulage von der Reibscheibe 14 der Dämpfungseinrichtung 13. Die Reibscheibe 14 bildet eine kreisringförmig angebrachte Verzahnung, insbesondere eine Hirth-Verzahnung, die formschlüssig in eine korrespondierende Kontaktfläche der Stützscheibe 8 eingreift.

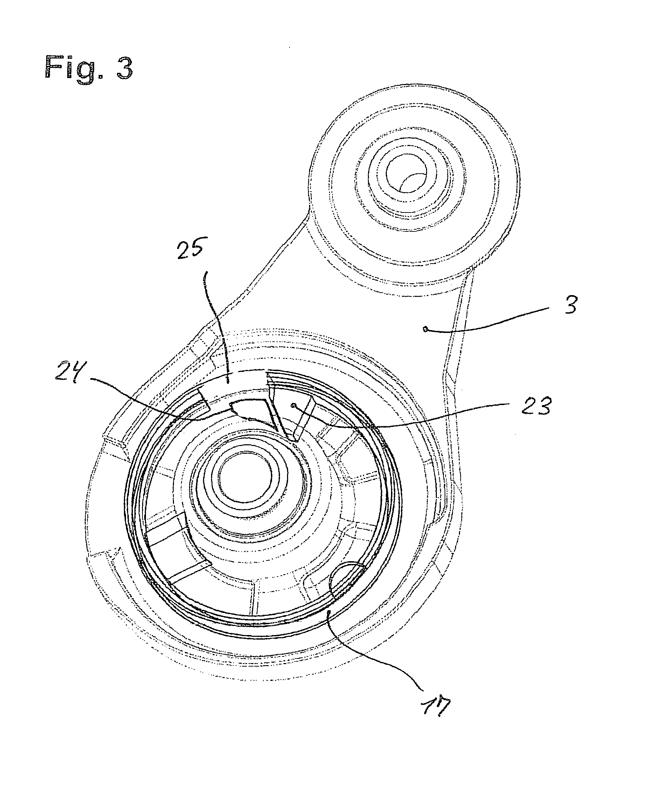

Figur 3 verdeutlicht die Einbaulage von dem Reibring 17 der Dämpfungseinrichtung 13. Ein einstückig mit dem Reibring 17 verbundener, radial nach innen gerichteter Keil 23 ist formschlüssig an einer Keilfläche eines axial vorstehenden Ansatzes 24 abgestützt. Eine kraftschlüssige Abstützung bewirkt das Federmittel 12, das den Keil 23 auf der vom Ansatz 24 abgewandten Seite über ein Federende 16 beaufschlagt. Eine der Vorspannung des Zugmittels entgegengerichtete Stellbewegung des Schwenkarms 3 bewirkt eine erhöhte Torsionskraft des Federmittels 12, wodurch sich das Federmittel 12 radial aufweitet und über das Federende 16 eine radial nach außen gerichtete Kraftkomponente auf den Keil 23 ausübt. Der eine Trennfuge 25 aufweisende Reibring 17 ist dadurch mit einer erhöhten Anpresskraft an der Innenwandung des Basisteils 2 abgestützt, zur Realisierung einer hohen Dämpfung.

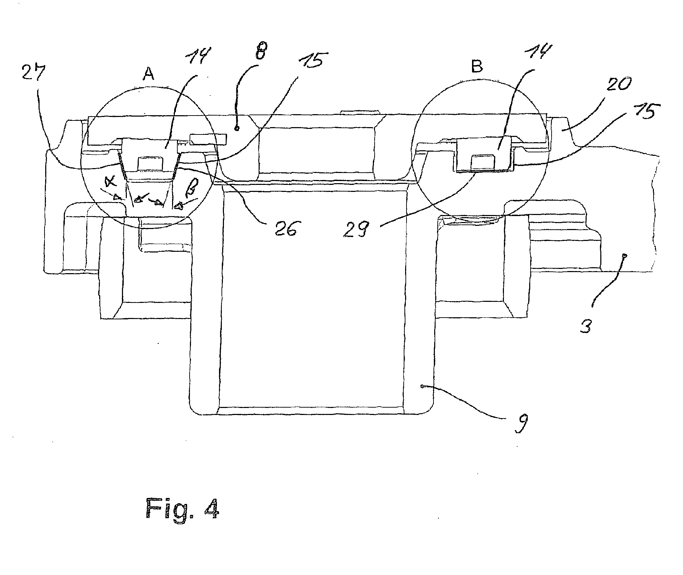

Die Figur 4 zeigt in einer vergrößerten Darstellung die Einbaulage von der Reibscheibe 14. Gemäß der Darstellung "A" bildet die Reibscheibe 14 einen Innenkonus 26 und einem Außenkonus 27, die formschlüssig in die Aufnahme 15 eingreifen. Die Wirkung der Dämpfungseinrichtung 13 kann insbesondere durch die Flankenwinkel "α" und "β" von dem Innenkonus 26 und dem Außenkonus 27 beeinflusst werden. Zur Erzielung einer gewissen Elastizität bzw. Gewichtsersparnis umfasst die Reibscheibe 14 schwenkarmseitig eine als Nut umlaufende oder partiell angeordnete Aussparung 28. Alternativ zu einer Flankenreibung zeigt die Variante "B" eine Axialflächenreibung der Reibscheibe 14. Dazu bildet eine Stirnfläche der Reibscheibe 14 gemeinsam mit einer radial verlaufenden Kontaktfläche 29 der Aufnahme 15 eine Reibfläche.

### Bezugszahlenliste

- 1: Spannvorrichtung
- 2: Basisteil
- 3: Spannarm
- 4: Aufnahme
- 5: Bolzen
- 6: Endabschnitt
- 7: Endabschnitt
- 8: Stützscheibe
- 9: Nabe
- 10: Gleitlagerung
- 11: Spannrolle
- 12: Federmittel
- 13: Dämpfungseinrichtung
- 14: Reibscheibe
- 15: Aufnahme
- 16: Federende
- 17: Reibring
- 18: Mantelfläche
- 19: Innenwandung
- 20: Bord
- 21: Ringspalt
- 22: Dichtelement
- 23: Keil
- 24: Ansatz
- 25: Trennfuge
- 26: Innenkonus
- 27: Außenkonus
- 28: Aussparung
- 29: Kontaktfläche

## Patentansprüche

1. Spannvorrichtung eines Zugmitteltriebs, umfassend ein ortsfest positioniertes Basisteil (2), dem ein Schwenkarm (3) zugeordnet ist, der über ein Drehlager, bestehend aus einer Nabe (9), einem Bolzen (5) des Basisteils (2) und einer Gleitlagerung (10) schwenkbar ist, und ein zwischen dem Basisteil (2) und dem Schwenkarm (3) eingesetztes Federmittel (12), das eine Spreizkraft ausübt sowie im Betriebszustand eine kraftschlüssige Abstützung einer mit dem Schwenkarm (3) verbundenen Spannrolle (11) an einem Zugmittel bewirkt, und eine Dämpfungseinrichtung (13), die Stellbewegungen des Schwenkarms (3) dämpft, **dadurch gekennzeichnet, dass** der Bolzen (5) mit einem Ende in dem Basisteil (2) und mit dem weiteren Ende in einer Stützscheibe (8) fixiert ist und die Dämpfungseinrichtung (13) zwei getrennte federkraftbeaufschlagte Reibelemente umfasst, eine Reibscheibe (14), die formschlüssig an der mit dem Bolzen (5) des Basisteils (2) verbundenen Stützscheibe (8) und reibschlüssig an dem Schwenkarm (3) abgestützt ist, sowie einen ein Federende (16) des Federmittels (12) umschließenden Reibring (17), der an dem Schwenkarm (3) fixiert und reibschlüssig an einer Innenwandung (19) des topfartig gestalteten Basisteils (2) abgestützt ist.

2. Spannvorrichtung nach Anspruch 1, **dadurch gekennzeichnet, dass** die Reibscheibe (14) über eine Verzahnung, insbesondere eine Hirth-Verzahnung mit der Stützscheibe (8) in Eingriff steht.

3. Spannvorrichtung nach Anspruch 1, **dadurch gekennzeichnet, dass** die Reibscheibe (14) schwenkarmseitig zumindest eine radial ausgerichtete bzw. konisch verlaufende und / oder eine axial ausgerichtete Reibfläche bildet.

4. Spannvorrichtung nach Anspruch 3, **dadurch gekennzeichnet, dass** die Reibscheibe (14) mit einem Innenkonus (26) und / oder einem Außenkonus (27) in eine korrespondierend ausgebildete axiale Aufnahme (15) des Schwenkarms (3) eingreift.

5. Spannvorrichtung nach Anspruch 4, **dadurch gekennzeichnet, dass** der Innenkonus (26) und der Außenkonus (47) der Reibscheibe (14) übereinstimmende oder voneinander abweichende Flankenwinkel aufweisen.

6. Spannvorrichtung nach Anspruch 1, **dadurch gekennzeichnet, dass** der eine Trennfuge (25) aufweisende Reibring (17) mit einer Mantelfläche (18) reibschlüssig an der Innenwandung (19) des Basisteils (2) abgestützt ist.

7. Spannvorrichtung nach Anspruch 1, **dadurch gekennzeichnet, dass** der eine Trennfuge (25) aufweisende Reibring (17) mit zumindest einem Reibschuh reibschlüssig an der Innenwandung (19) des Basisteils (2) abgestützt ist.

8. Spannvorrichtung nach Anspruch 6 oder Anspruch 7, **dadurch gekennzeichnet, dass** der Reibring (17) einen radial nach innen gerichteten Keil (23) aufweist, der im Betriebszustand zwischen einer Keilfläche eines axial vorspringenden Ansatzes (24) des Schwenkarms (3) und dem Federende (16) des Federmittels (12) eingesetzt ist.

9. Spannvorrichtung nach einem der Ansprüche 1 bis 6, **dadurch gekennzeichnet, dass** als Werkstoff für die Reibscheibe (14) und / oder für den Reibring (17) PA 46 mit einem chemisch gekoppeltem PTFE Zusatz vorgesehen ist.

10. Spannvorrichtung nach Anspruch 1, **dadurch gekennzeichnet, dass** der Bolzen (5) beidseitig gestufte Endabschnitte (6,7) bildet, die als Fügeverband in eine Bohrung des Basisteils (2) oder der Stützscheibe (8) eingepasst und form- und / oder stoffschlüssig befestigt ist.

11. Spannvorrichtung nach Anspruch 7, **dadurch gekennzeichnet, dass** die das Drehlager mittelbar oder unmittelbar bildenden Bauteile, das Basisteil (2), der Schwenkarm (3), der Bolzen (5) sowie die Stützscheibe (8) aus gleichen oder unterschiedlichen Werkstoffen hergestellt sind.

12. Spannvorrichtung nach einem der vorhergehenden Ansprüche 1 bis 11, **dadurch gekennzeichnet, dass** der Schwenkarm (3) einen axial vorstehenden Bord (20) bildet, der unter Einhaltung eines Ringspaltes (21) die Stützscheibe (8) außenseitig umschließt.

13. Spannvorrichtung nach Anspruch 12, **dadurch gekennzeichnet, dass** zur Abdichtung der Dämpfungseinrichtung (13) in dem Ringspalt (21) zwischen dem Bord (20) des Schwenkarms (3) und der Stützscheibe (8) ein Dichtelement (22) eingesetzt ist.

14. Spannvorrichtung nach einem der vorhergehenden Ansprüche 1 bis 11, **dadurch gekennzeichnet, dass** die Spannrolle (11) endseitig auf der zum Basisteil (2) gerichteten Seite an dem Schwenkarm (3) positioniert ist.

## Claims

1. Tensioning apparatus of a traction mechanism drive, comprising a base part (2) which is positioned in a stationary manner and is assigned a pivot arm (3) which can be pivoted via a pivot bearing, consisting of a hub (9), a pin (5) of the base part (2) and a sliding bearing (10), and a spring means (12) which is inserted between the base part (2) and the pivot arm (3), exerts a spreading force and, in the operating state, brings about non-positive support of a tensioning roller (11), which is connected to the pivot arm (3), on a traction mechanism, and a damping device (13) which damps actuating movements of the pivot arm (3), **characterized in that** the pin (5) is fixed with one end in the base part (2) and with the other end in a supporting disc (8), and the damping device (13) comprises two separate friction elements which are loaded by spring force, a friction disc (14) which is supported in a positively locking manner on the supporting disc (8) which is connected to the pin (5) of the base part (2) and in a frictionally engaging manner on the pivot arm (3), and a friction ring (17) which encloses one spring end (16) of the spring means (12), is fixed on the pivot arm (3) and is supported in a frictionally engaging manner on an inner wall (19) of the base part (2) of cup-like design.

2. Tensioning apparatus according to Claim 1, **characterized in that** the friction disc (14) is in engagement with the supporting disc (8) via a toothing system, in particular a Hirth toothing system.

3. Tensioning apparatus according to Claim 1, **characterized in that** the friction disc (14) forms on the pivot arm side at least one radially oriented or conically running friction face and/or one axially oriented friction face.

4. Tensioning apparatus according to Claim 3, **characterized in that** the friction disc (14) engages with an inner cone (26) and/or an outer cone (27) into an axial receptacle (15) of corresponding configuration of the pivot arm (3).

5. Tensioning apparatus according to Claim 4, **characterized in that** the inner cone (26) and the outer cone (27) of the friction disc (14) have flank angles which correspond with or differ from one another.

6. Tensioning apparatus according to Claim 1, **characterized in that** the friction ring (17) which has a joint (25) is supported with a circumferential face (18) in a frictionally engaging manner on the inner wall (19) of the base part (2).

7. Tensioning apparatus according to Claim 1, **characterized in that** the friction ring (17) which has a joint (25) is supported with at least one friction shoe in a frictionally engaging manner on the inner wall (19) of the base part (2).

8. Tensioning apparatus according to Claim 6 or Claim 7, **characterized in that** the friction ring (17) has a radially inwardly directed wedge (23) which, in the operating state, is inserted between a wedge face of an axially projecting extension (24) of the pivot arm (3) and the spring end (16) of the spring means (12).

9. Tensioning apparatus according to one of Claims 1 to 6, **characterized in that** PA 46 with a chemically coupled PTFE additive is provided as material for the friction disc (14) and/or for the friction ring (17).

10. Tensioning apparatus according to Claim 1, **characterized in that** the pin (5) forms end sections (6, 7) which are stepped on both sides which are fitted as a joint connection into a hole of the base part (2) or the supporting disc (8) and are fastened in a positively locking and/or material-to-material manner.

11. Tensioning apparatus according to Claim 7, **characterized in that** the components which indirectly or directly form the pivot bearing, the base part (2), the pivot arm (3), the pin (5) and the supporting disc (8) are produced from the same or different materials.

12. Tensioning apparatus according to one of the preceding Claims 1 to 11, **characterized in that** the pivot arm (3) forms an axially protruding rim (20) which encloses the supporting disc (8) on the outer side with the maintenance of an annular gap (21).

13. Tensioning apparatus according to Claim 12, **characterized in that**, in order to seal the damping device (13), a sealing element (22) is inserted in the annular gap (21) between the rim (20) of the pivot arm (3) and the supporting disc (8).

14. Tensioning apparatus according to one of the preceding Claims 1 to 11, **characterized in that** the tensioning roller (11) is positioned on the pivot arm (3) on the end side on the side which is directed towards the base part (2).

## Revendications

1. Dispositif de tensionnement d'un entraînement à moyen de traction, comprenant une partie de base (2) positionnée fixement, à laquelle est associé un bras pivotant (3) qui peut pivoter par le biais d'un palier pivotant constitué d'un moyeu (9), d'un boulon (5) de la partie de base (2) et d'un support sur palier lisse (10), et un moyen de ressort (12) inséré entre la partie de base (2) et le bras pivotant (3), lequel moyen de ressort exerce une force d'écartement et provoque également dans l'état de fonctionnement un support par engagement par force d'une poulie de tensionnement (11) connectée au bras pivotant (3) au niveau d'un moyen de traction, et un dispositif d'amortissement (13) qui amortit les mouvements de réglage du bras pivotant (3), **caractérisé en ce que** le boulon (5) est fixé par une extrémité dans la partie de base (2) et par l'autre extrémité dans un disque de support (8) et le dispositif d'amortissement (13) comprend deux éléments de friction séparés sollicités par une force de ressort, à savoir un disque de friction (14) qui est supporté par engagement par correspondance de forme sur le disque de support (8) connecté au boulon (5) de la partie de base (2) et par engagement par friction au bras pivotant (3), ainsi qu'une bague de friction (17) entourant une extrémité de ressort (16) du moyen de ressort (12), laquelle bague de friction est fixée sur le bras pivotant (3) et est supportée par engagement par friction sur une paroi interne (19) de la partie de base (2) de configuration en forme de pot.

2. Dispositif de tensionnement selon la revendication 1, **caractérisé en ce que** le disque de friction (14) est en prise avec le disque de support (8) par le biais d'une denture, en particulier une denture de Hirth.

3. Dispositif de tensionnement selon la revendication 1, **caractérisé en ce que** le disque de friction (14) forme, du côté du bras pivotant, au moins une surface de friction orientée radialement ou s'étendant sous forme conique et/ou une surface de friction orientée axialement.

4. Dispositif de tensionnement selon la revendication 3, **caractérisé en ce que** le disque de friction (14) vient en prise avec un cône interne (26) et/ou avec un cône externe (27) dans un logement axial (15) du bras pivotant (3) réalisé de manière correspondante.

5. Dispositif de tensionnement selon la revendication 4, **caractérisé en ce que** le cône interne (26) et le cône externe (27) du disque de friction (14) présentent des angles de flanc coïncidant ou s'écartant l'un de l'autre.

6. Dispositif de tensionnement selon la revendication 1, **caractérisé en ce que** la bague de friction (17) présentant un joint de séparation (25) est supportée avec une surface d'enveloppe (18) par engagement par friction au niveau de la paroi interne (19) de la partie de base (2).

7. Dispositif de tensionnement selon la revendication 1, **caractérisé en ce que** la bague de friction (17) présentant un joint de séparation (25) est supportée avec au moins un sabot de friction par engagement par friction au niveau de la paroi interne (19) de la partie de base (2).

8. Dispositif de tensionnement selon la revendication 6 ou la revendication 7, **caractérisé en ce que** la bague de friction (17) présente une clavette orientée radialement vers l'intérieur (23) qui est insérée, dans l'état de fonctionnement, entre une surface de clavette d'un élément rapporté (24) du bras pivotant (3), saillant axialement, et l'extrémité de ressort (16) du moyen de ressort (12).

9. Dispositif de tensionnement selon l'une quelconque des revendications 1 à 6, **caractérisé en ce que** le matériau prévu pour le disque de friction (14) et/ou pour la bague de friction (17) est du PA 46 avec addition de PTFE couplé chimiquement.

10. Dispositif de tensionnement selon la revendication 1, **caractérisé en ce que** le boulon (5) forme des deux côtés des portions d'extrémité étagées (6, 7), qui sont ajustées en tant qu'assemblage à joint dans un alésage de la partie de base (2) ou du disque de support (8) et qui sont fixées par engagement par correspondance de forme et/ou par liaison de matière.

11. Dispositif de tensionnement selon la revendication 7, **caractérisé en ce que** les composants formant directement ou indirectement le palier pivotant, la partie de base (2), le bras pivotant (3), le boulon (5) et le disque de support (8) sont fabriqués en des matériaux identiques ou différents.

12. Dispositif de tensionnement selon l'une quelconque des revendications précédentes 1 à 11, **caractérisé en ce que** le bras pivotant (3) forme un bord saillant axialement (20) qui entoure du côté extérieur le disque de support (8) en conservant un interstice annulaire (21).

13. Dispositif de tensionnement selon la revendication 12, **caractérisé en ce qu'**un élément d'étanchéité (22) est inséré pour réaliser l'étanchéité du dispositif d'amortissement (13) dans l'interstice annulaire (21) entre le bord (20) du bras pivotant (3) et le disque de support (8).

14. Dispositif de tensionnement selon l'une quelconque des revendications précédentes 1 à 11, **caractérisé en ce que** la poulie de tensionnement (11) est positionnée sur le bras pivotant (3) du côté de l'extrémité, sur le côté orienté vers la partie de base (2).
